Europäisches Patentamt

European Patent Office

Office européen des brevets

(11) Publication number: **0 360 604**
**A2**

(12) # EUROPEAN PATENT APPLICATION

(21) Application number: **89309613.1**

(22) Date of filing: **21.09.89**

(51) Int. Cl.⁵: **G 01 N 1/10**
**G 01 N 30/20**

(30) Priority: **23.09.88 US 248832**

(43) Date of publication of application:
**28.03.90 Bulletin 90/13**

(84) Designated Contracting States:
**CH DE FR GB IT LI**

(71) Applicant: **Spectra-Physics Inc.**
**3333 North First Street**
**San Jose California 94134-1995 (US)**

(72) Inventor: **Nohl, Andre**
**4464 Partridge Court**
**San Jose California 96121 (US)**

**White, Landy B.**
**2483 Kilkare Road**
**Sunol California 94586 (US)**

(74) Representative: **Jones, Ian et al**
**POLLAK MERCER & TENCH High Holborn House 52-54**
**High Holborn**
**London WC1V 6RY (GB)**

(54) **Liquid sample movement.**

(57) A pushloop liquid sampling method and apparatus provides for the introduction of liquid samples into test equipment (such as for liquid chromotogaphy) via a six port valve. The method involves pulling the sample completely past the sample loop in the six port valve and then pushing the desired amount of sample back into the sample loop.

PRIOR ART
FIG. 1A

FILL POSITION

**Description**

<div align="center">

**LIQUID SAMPLE MOVEMENT**

</div>

This invention relates to the movement of a liquid sample, for example in liquid chromotography equipment or in blood testing equipment. The invention is concerned with improving the introduction of liquid samples into such equipment.

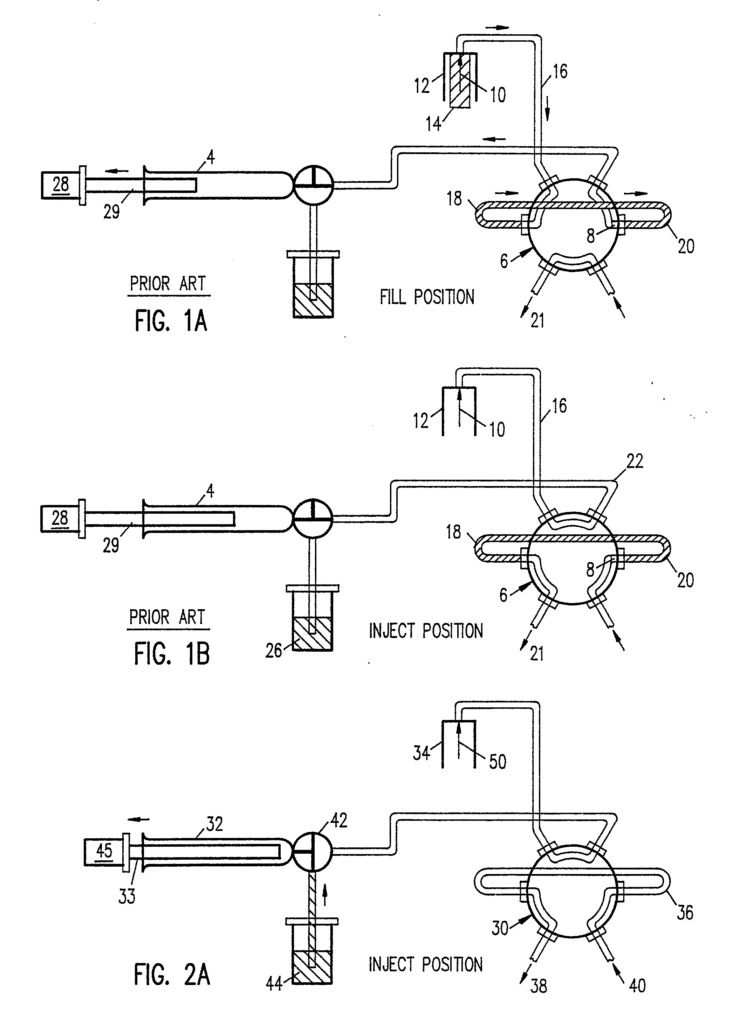

The typical liquid sampling apparatus is as shown in Fig. 1 of the accompanying drawings, of which Figs. 1A and 1B show a typical liquid sampling apparatus in respective different positions.

The prior art method for doing sample loop injections with the typical liquid sampling apparatus shown in Figs. 1A and 1B comprises steps as follows.

1. The plunger 29 of syringe 4 pushes forward a bit, with the six port valve 6, at "FILL".

2. The plunger 29 pulls a small air bubble 8 into the needle 10 in the sample tower 12.

3. The vial 14 is lifted into the sample tower 12.

4. The plunger 29 pulls the exact amount desired from the vial 14 (plus a small quantity such as 0.6 μL to account for loss on the walls of the tubing 16).

5. The vial 14 is lowered.

6. The plunger 29 then pulls the sample 18, with air bubble 8 ahead of sample 18, the precise distance into the sample loop 20.

7. The six port valve 5 is thrown to "INJECT" so the sample 18 can be analyzed in the remaining part of the equipment, including analytical column 21, as shown in Fig. 1B.

There are several possible problems associated with this routine. The first is the introduction of an air bubble into the sample loop 20 behind the sample slug 18. There is also the possibility of introducing unwanted air into the sample loop 20 ahead of the sample 18 if the sample 18 is pulled more than the exact amount. Air bubbles can be broken up and dispersed at connector junctions 22 causing inaccuracies in the sample draw.

The second is the possibility of leaving part of the sample 18 on the walls of the transport tubing 16 since this tubing 16 is not "swept" with solvent (hence the 0.6 μL offset). Also, to draw the correct amount of sample 18, the flush solvent 26 used to clean the system between samples must be completely degassed. Otherwise, there is the possibility of cavitation or outgassing when the plunger 29 is drawn back. This creates air bubbles which can make the volume of sample 18 drawn very inaccurate.

A major source of error concerns the design of the mechanical syringe drive 28. Even on a brand new system, where there is very little play in the screwdrive (not shown), the shuttle (not shown) that holds the plunger 29 can wobble when the lead screw (not shown) rotates. Over a period of time, the drive 28 will wear and more "slop" is introduced. This affects the accuracy of the volume of sample 18 drawn as well as the reproducibility of the sample volume over time.

It is accordingly desirable to provide a method and an apparatus offering improved longer-term reproducibility and accuracy for sample loop injections.

The invention thus provides a method of and an apparatus for pulling sample liquid into a valve, typically completely past the sample loop of a valve including such a loop, and then pushing at least a part of the liquid, that is, the correct amount, back into the valve, typically into the sample loop. In detail, the routine can be as follows:

1. Pull a small amount of flush solvent into the syringe from the reservoir of flush solvent, thus taking care of backlash in the syringe drive.

2. Switch the syringe to the transport tubing leading to the sample tower. Then pull a small air bubble into the needle which is in the sample tower. The vial is lifted into the sample tower.

3. With the six port valve in the "INJECT" position, pull enough sample past the six port valve so that the desired amount of the sample can be pushed back.

4. Then a small amount of the sample is pushed back to take up backlash in the syringe drive mechanism.

5. The six port valve is switched to the "FILL" position.

6. The desired volume of the sample is pushed back into the sample loop.

7. The six port valve is switched back to the "INJECT" position, and the desired volume of the sample is injected into the analytical column.

The method of the present invention can thus be performed manually using the apparatus of the prior art, but the invention also provides an apparatus comprising a computer programmed to control appropriate means so as to perform the method.

The benefits of the present invention over the prior art include:

1. Better linearity.

2. Better precision.

3. Better accuracy of volume.

4. No need for degassing the flush solvent.

5. a cleaner test baseline, due to elimination of air bubbles. Air bubbles, when injected, create artifacts on the baseline early in the analytical process.

The invention is further described below, by way of example, with reference to the remaining Figures of the accompanying drawing, in which:

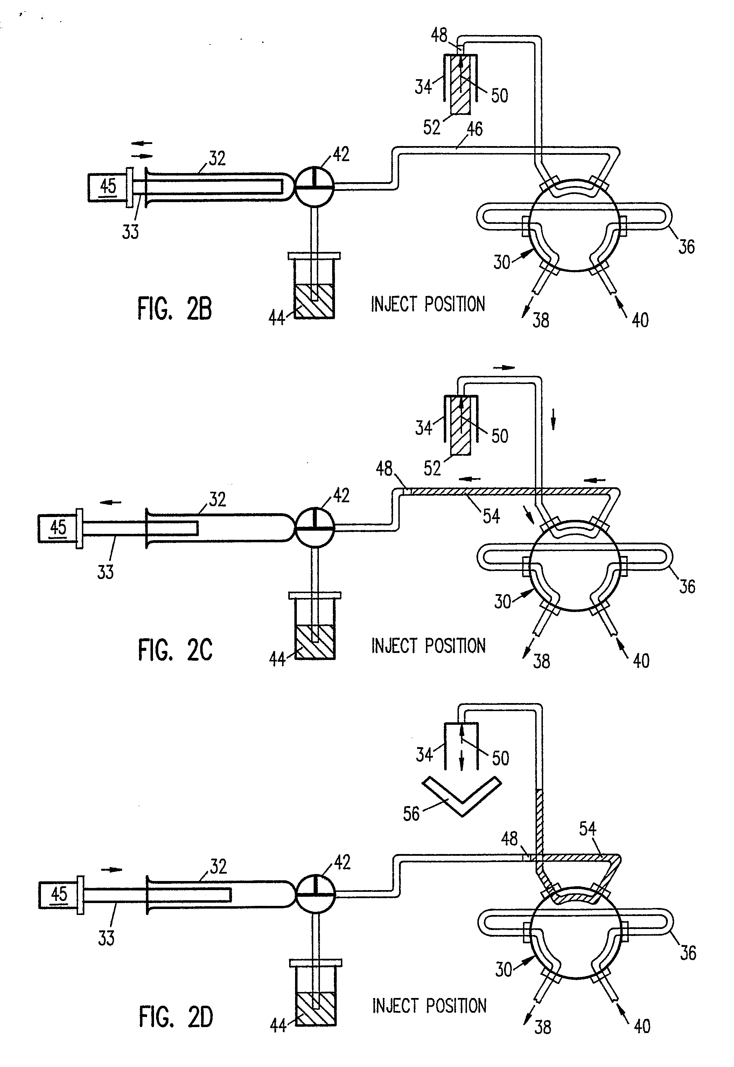

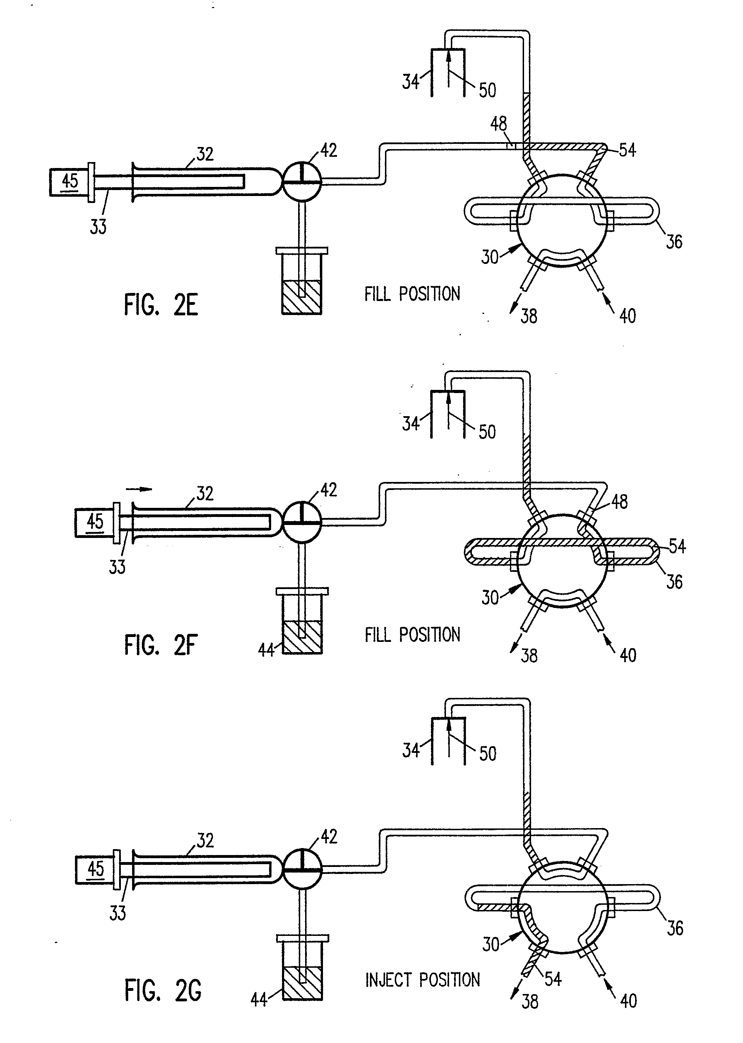

Figs. 2A, 2B, 2C, 2D, 2E, 2F and 2G illustrate successive steps of a method in accordance with the present invention.

Fig. 2A shows the same arrangement of liquid sampling apparatus as shown in Fig. 1. The six port valve 30 has two positions: "FILL" wherein the syringe 32 is connected to the sample tower 34 via sample loop 36, and "INJECT" wherein the sample loop 36 is connected to the test column 38 with a fluid return for the sample by means of pump 40. Three way valve 42 connects the reservoir 44 of the flush solvent to syringe 32.

The method of the present invention includes the following steps:

First, as shown in FIG. 2A, three way valve 42 is switched so as to connect the reservoir 44 of flush solvent to syringe 32. Plunger 33 of syringe 32 is withdrawn so as to pull a small amount of flush solvent, typically 3 μL, into syringe 32. The amount of flush solvent pulled by the plunger 33 must be enough to account for backlash in the drive mechanism 45 for syringe 32.

Second, in FIG. 2B, three way valve 42 is switched so syringe 32 is connected to transport tubing 46. Six port valve 30 is in the "INJECT" position. The three-way valve 42 is closed so the flush reservoir 44 is no longer connected to syringe 32. The plunger 33 is withdrawn so as to pull a small air bubble 48 into needle 50. Then sample vial 52 is lifted into the sample tower 34.

Third, in FIG. 2C, the desired amount of sample 54 (such as 30 μL for a 10μL injection) is drawn out of sample vial 52 by further withdrawing plunger 33. Sample 54 is preceded by air bubble 48. Then sample vial 52 is lowered out of sample tower 34.

Fourth, in FIG. 2D, a flush funnel 56 is moved into the sample tower 34. Then plunger 33 is pushed back so as to take up mechanical backlash in the syringe drive mechanism 45; typically this push back will push about 3 μL of the sample 54 into the flush funnel 56, to be disposed of.

Fifth, in FIG. 2E, six port valve 30 is switched to the "FILL" position.

Sixth, in FIG. 2F, the plunger 33 is pushed back to push the desired volume 54 of sample into the sample loop 36. Bubble 48 is not pushed into the sample loop 36.

(That part of the sample 54 not pushed into the loop 36 is flushed to waste after the sample 54 is injected as described below.)

Seventh, in Fig. 2G, six port valve 30 is switched to the "INJECT" position. Sample volume 54 then moves into analytical column 38. After analysis, the analyzed sample 54 is flushed to waste, as is that part of the sample 54 which was not pushed into sample loop 36.

Preferably, the method as described above is performed under control of a computer which can also control the entire system of liquid test equipment.

Other embodiments of the invention will be apparent to one of ordinary skill in the art. For instance, the syringe could be replaced by any metering device. Also, the six port valve could have additional ports.

The above description of the invention is illustrated and not limiting. Further modifications and equivalents may be employed without departing from the scope of the invention as defined by the appended claims.

**Claims**

1. A method of moving a liquid sample by means of a valve comprising the steps of moving the sample through the valve in a first direction, and moving at least a portion of the sample into the valve in a second direction.

2. A method as claimed in claim 1 wherein the valve has a first position during the step of moving the sample through the valve in the first direction and is switched to a second position prior to the step of moving at least a portion of the sample into the valve in the second direction.

3. A method as claimed in claim 2 wherein the valve is switched to the first position after the step of passing at least a portion of the sample into the valve in the second direction.

4. A method as claimed in claim 2 or 3 wherein a metering device is used in moving the sample into the valve at least in the second direction.

5. A method as claimed in claim 4 wherein backlash in the metering device is taken up prior to the step of switching the valve to the second position.

6. A method as claimed in claim 4 or 5 wherein backlash in the metering device is taken up prior to the step of moving the sample in the first direction.

7. A method as claimed in claim 6 wherein the step of taking up backlash includes providing a volume of a flush solvent to the metering device.

8. A method as claimed in any one of claims 4-7 wherein the valve includes a sample loop, and the first valve position disconnects the metering device from the sample loop, and the second valve position connects the metering device to the sample loop.

9. A method as claimed in any one of claims 4-8 wherein the metering device is a syringe.

10. A method as claimed in any one of claims 1-8 wherein the valve includes at least six ports.

11. A method as claimed in claim 10 wherein the valve includes a sample loop.

12. A method as claimed in any preceding claim wherein the volume of the sample passed through the valve in the second direction is less than the volume of the sample passed into the valve in the first direction.

13. A method as claimed in any preceding claim comprising the step of passing the sample out of the valve after the step of passing the sample into the valve in the second direction.

14. A method as claimed in any preceding claim wherein the steps are under control of computer means.

15. An apparatus for moving a liquid sample, the apparatus comprising a valve movable between first and second positions under control of a computer means, and means for moving liquid through the valve under control of the computer means, the computer means causing liquid to be moved through the valve in a first direction with the valve in the first position and then to move at least a portion of the liquid into the valve in a second direction after movement of the valve to the second position.

16. A method of measuring fluid volume by metering means and valve means having at least two positions, the method comprising the steps of:

taking up mechanical backlash in the metering means;

next, the valve means being in a first position, passing an amount of the fluid through the valve means in a first direction by means of the metering means;

next, taking up mechanical backlash in the metering means;

next, switching the valve to the second position;

next, passing a portion of the amount of fluid into the valve in a second direction by means of the metering means; and

next, switching the valve to the first position.

PRIOR ART
FIG. 1A

FILL POSITION

PRIOR ART
FIG. 1B

INJECT POSITION

FIG. 2A

INJECT POSITION

FIG. 2B    INJECT POSITION

FIG. 2C    INJECT POSITION

FIG. 2D    INJECT POSITION

FIG. 2E    FILL POSITION

FIG. 2F    FILL POSITION

FIG. 2G    INJECT POSITION